# EUROPEAN PATENT SPECIFICATION

(11) **EP 2 774 574 B1**
(45) Date of publication and mention of the grant of the patent: **16.05.2018**
(21) Application number: 14157497.0
(22) Date of filing: 03.03.2014
(51) Int. Cl.: A61C 1/18, A61G 15/14, A61C 1/00, F16N 7/00

(54) **Dental cord**
Dentalschnur
Cordon dentaire

(30) Priority: 05.03.2013 IT AN20130045
(43) Date of publication of application: 10.09.2014
(73) Proprietor: Riccardi, Luca, 61035 Mondolfo (PS) (IT)
(72) Inventor: Riccardi, Luca, 61035 Mondolfo (PS) (IT)
(74) Representative: Baldi, Claudio

(56) References cited:
- BR-A- PI0 800 713
- US-A- 4 990 087
- US-A- 5 054 584

## Description

The present patent application for industrial invention relates to a dental cord.

A dental unit, which is commonly defined as "dentist's chair", comprises a chair used by the patient to lie down, which is provided with a reclining back that allows the patient to adopt the most suitable position according to the operation to be made.

Moreover, the dental unit comprises a dental delivery system, which consists in a tablet with a control panel, adapted to be disposed above the patient, while the patient lies on the chair.

The dental delivery unit supports a plurality of handpieces and controls the operation of said handpieces, each of them supporting a specific tool for oral cavity operations.

Each handpiece is connected to the dental delivery system by means of a corresponding cable, which is known as "dental cord".

More precisely, each dental cord is provided with a first end, which is fixed to the dental delivery system, and a second end, which is connected to the corresponding handpiece.

The dental cord contains electrical wires or hydraulic tubes that carry the necessary power to operate the handpiece, such as electricity, water and air.

Each handpiece must be lubricated every 15/30 minutes of use.

Consequently, if the treatment lasts more than half an hour, the operator must necessarily stop the treatment and lubricate the handpiece.

Evidently, each treatment provides for the alternate use of multiple handpieces and therefore the operator must necessarily control the operating time of each handpiece by means of an alarm clock or a timer.

US4990087 **discloses an apparatus for providing a maintenance treatment to a dental tool comprising a station to which the tool is able to be detachably mounted, an agent supply means, and a purging substance supply means.**

The purpose of the present invention is to devise an improved dental cord that can remedy the drawbacks of the prior art as described above.

The dental cord of the invention comprises a first end connected to a dental delivery system and a second end connected to a dental handpiece.

The peculiarity of the dental cord of the invention consists in that it comprises:
- a chronometer used to detect the total operating time of the handpiece;
- a detector/activator device that detects the operation of the handpiece and activates the chronometer when the handpiece is in operation;
- a detecting/warning device;
- a connection device between said chronometer and said detecting/warning device; said connection device being adapted to actuate the detecting/warning device as soon as the chronometer detects that the total operating time of the handpiece exceeds a predefined value;
- reset means used to reset the chronometer.

For purpose of clarity, the description of the dental cord according to the present invention continues with reference to the attached drawings, which are intended for purposes of illustration only, and not in a limiting sense, wherein:

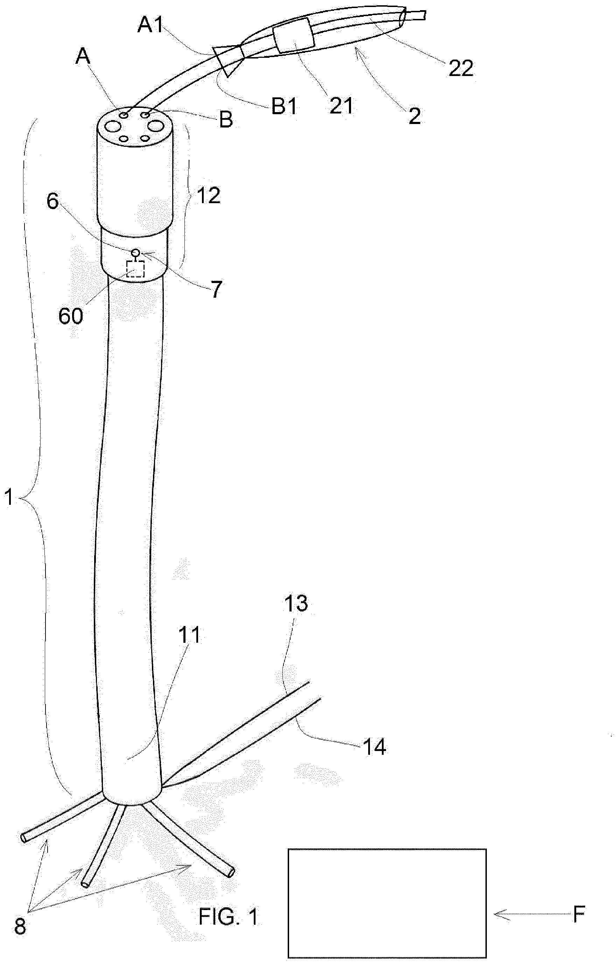

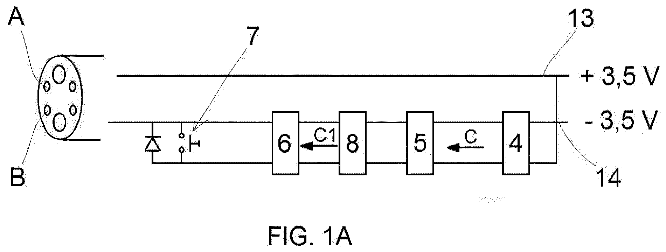

- Fig. 1 is an axonometric view of the dental cord of the invention and an exploded diagrammatic view of a handpiece and a dental delivery system;
- Fig. 1A is a diagrammatic view of the electrical circuit comprised in the dental cord of the invention.

Referring to Figure 1, a dental cord according to the invention is disclosed, being generally indicated with reference numeral (1).

The dental cord (1) comprises a first end (11) connected to a dental delivery system (F) and a second end (12) connected to a dental handpiece (2).

Said dental cord (1) also comprises:
- a chronometer (5) used to detect the total operating time of the handpiece (2);
- a detector/activator device that detects the operation of the handpiece (2) and activates the chronometer (5) when the handpiece (2) is in operation;
- a detecting/warning device (6) provided at the second end (12) of the dental cord (1);
- a connection device between said chronometer (5) and said detecting/warning device (6); said connection device being adapted to actuate the detecting/warning device (6) as soon as the chronometer (5) detects that the total operating time of the handpiece (2) exceeds a predefined value;
- reset means (7) used to reset the chronometer (5).

Specifically, the connection device between said chronometer (5) and said detecting/warning device (6) is a control and management unit (8).

More precisely, the chronometer (5) is electrically connected to the detecting/warning device (6) by means of said control and management unit (8).

When the chronometer (5) detects an operating time of the handpiece (2) higher than a predefined value, for example 15 minutes, the control and management system (8) sends a control signal (C1) to the detecting/warning device (6).

The detecting/warning device (6) receives the control signal (C1) issued by the control and management system (8) and generates an alarm to inform the operator about the need to lubricate the handpiece (2).

Referring to Fig. 1, the handpiece (2) comprises a light source and an optical fiber (22) connected to the light source and adapted to direct the light inside the patient's mouth.

Alternatively, said light source can be provided on the dental cord (1).

Specifically, said light source consists in a lamp (21).

Referring to Fig. 1A, the dental cord (1) comprises a pair of electrical wires (13, 14) that power the lamp (21) of the handpiece (2).

It must be noted that, when the handpiece (2) is used, a voltage difference comprised between 3 and 4 V is present between the two electrical wires (13, 14).

The electrical wires (13, 14) end in two contacts (A, B) provided on the second end (12) of the dental cord (1).

The handpiece (2) comprises two contacts (A1, B1), which are adapted to cooperate with the two contacts (A, B) of the dental cord (1) and are electrically connected to the lamp (21).

Referring to Fig. 1A, said detecting/warning device advantageously consists in a voltage detector (4) adapted to detect the voltage difference between the two electrical wires (13, 14).

The voltage detector (4) is electrically connected to the chronometer (5).

More precisely, when the voltage detector (4) detects a voltage difference between the two electrical wires (13, 14) comprised between 3 and 4 V, it sends a control signal (C) to the chronometer (5).

The chronometer (5) receives the control signal (C) emitted by the voltage detector (4) and starts to detect the operating time of the handpiece (2).

The detecting/warning device (6) is powered by the two electrical wires (13, 14).

Alternatively, the dental cord (1) comprises a plurality of tubes (8) for compressed air and a pneumatic-electrical actuator (60) that activates said detecting/warning device (6) by means of a voltage generated by the compressed air that passes through said pneumatic-electrical actuator (60).

The detecting/warning device (6) can be of visual and/or acoustic type.

The dental cord (1) also comprises said reset means (7) to reset the chronometer (5).

The reset means (7) comprise a reset button provided on the second end (12) of the dental cord (1) and manually actuated by the operator.

Said reset means (7) can also comprise a semi-rotating nut that activates the reset button.

Alternatively, said reset means (7) can comprise an inclination sensor that detects the inclination of the dental cord and resets the chronometer (5) as soon as the dental cord (1) is inclined upwards by an angle comprised between 10° and 60°, preferably 45°.

Advantageously, the detecting/warning device (6) is a LED provided above the reset button or a luminous ring provided around the dental cord (1), preferably in proximal position to the second end (12) of the dental cord (1).

The presence of the luminous ring in the dental cord (1) of the invention allows the dentist to see the light emitted by the detecting/warning device from any angle.

The description continues with reference tot he operation of the dental cord (1) of the invention.

When the handpiece (2) is operated, the voltage detector (4) detects a voltage difference between the two electrical wires (13, 14) comprised between 3 and 4 V, and sends a control signal (C) to the chronometer (5).

The chronometer (5) receives the control signal (C) emitted by the voltage detector (4) and starts to detect the operating time of the handpiece (2).

As soon as the operating time of the handpiece (2) exceeds the predefined threshold value, for example 15 minutes, the control and management system (8) sends the control signal (C1) to the detecting/warning device (6).

The detecting/warning device (6) receives the control signal (C1) issued by the control and management system (8) and generates an alarm to inform the operator about the need to lubricate the handpiece (2).

After lubricating the handpiece (2), the operator presses the reset button to reset the chronometer (5).

As soon as the handpiece (2) is used again, the voltage detector (4) sends the control signal (C) to the chronometer (5) again and the chronometer (5) starts detecting the operating time of the handpiece (2) again.

The present invention also relates to a dental delivery system (F) comprising at least one dental cord (1) as described above.

The present invention also relates to a dental unit comprising at least one dental cord (1) as described above.

## Claims

1. Dental cord (1) comprising a first end (11) connectable to a dental delivery system (F) and a second end (12) connectable to a dental handpiece (2),
dental cord (1) **characterized in that** it comprises:
- a chronometer (5) usable to detect the total operating time of the handpiece (2);
- a detector/activator device able to detect the operation of the handpiece (2) and can activates the chronometer (5) when the handpiece (2) is in operation;
- a detecting/warning device (6);
- a connection device between said chronometer (5) and said detecting/warning device (6); said connection device being adapted to actuate the detecting/warning device (6) as soon as the chronometer (5) detects that the total operating time of the handpiece (2) exceeds a predefined value;
- reset means (7) usable to reset the chronometer (5).

2. The dental cord (1) of claim 1, wherein said connection device between said chronometer (5) and said detecting/warning device (6) is a control and management unit (8).

3. The dental cord (1) of claim 1 or 2, comprising a pair of electrical wires (13, 14) that power a light source provided on the handpiece (2) or on the dental cord (1); said pair of electrical wires (13, 14) being adapted to power said detecting/warning device (6), which consists in a voltage detector (4) that detects the voltage difference between the two electrical wires (13, 14).

4. The dental cord (1) of claim 1 or 2, comprising at least one tube (8) crossable by compressed air; said dental cord (1) comprising a pneumatic-electrical actuator (60) that activates said detecting/warning device (6) through a voltage generated by the compressed air that passes through said pneumatic-electrical actuator (60).

5. The dental cord (1) of any one of the preceding claims, wherein said detecting/warning device (6) is of visual type, preferably an LED and/or a luminous ring disposed around the dental cord (1), preferably proximal to the second end (12) of the dental cord (1).

6. The dental cord (1) of any one of claims 1 to 4, wherein said detecting/warning device (6) is of acoustic type.

7. The dental cord (1) of any one of the preceding claims, wherein said reset means (7) comprise a reset button provided on the second end (12) of the dental cord (1) and can be actuated by the operator manually; said detecting/warning device (6) being preferably provided on the reset button.

8. The dental cord (1) of any one of the preceding claims, wherein said reset means (7) consist in an inclination sensor.

9. Assembly comprising a dental delivery system (F) and at least one dental cord (1) according to any one of the preceding claims.

10. A dental unit comprising at least one dental cord (1) according to any one of the claims 1 to 8.

## Patentansprüche

1. Dentalkabel (1), umfassend einen ersten Endabschnitt (11), der mit einem Köcher verbindbar ist, und einen zweiten Endabschnitt (12), der mit einem Handstück (2) verbindbar ist;
Dentalkabel (1), **dadurch gekennzeichnet, dass** es Folgendes umfasst:
- einen Zeitmesser (5), der zum Erfassen der Gesamtbetriebsdauer des Handstücks (2) verwendbar ist;
- eine Detektor-/Aktivator-Vorrichtung, die in der Lage ist, den Betrieb des Handstücks (2) zu erfassen und den Zeitmesser (5) zu aktivieren, wenn das Handstück (2) in Betrieb ist;
- eine Erfassungs-/Warnvorrichtung (6);
- eine Verbindungsvorrichtung zwischen dem Zeitmesser (5) und der Erfassungs-/Warnvorrichtung (6); wobei die Verbindungsvorrichtung dazu bestimmt ist, die Erfassungs-/Warnvorrichtung (6) zu betätigen, sobald der Zeitmesser (5) feststellt, dass die Gesamtbetriebsdauer des Handstücks (2) einen voreingestellten Wert überschreitet;
- Rücksetzungsmittel (7), die zum Rücksetzen des Zeitmessers (5) auf Null verwendbar sind.

2. Dentalkabel (1) nach Anspruch 1, wobei die Verbindungsvorrichtung zwischen dem Zeitmesser (5) und der Erfassungs-/Warnvorrichtung (6) eine Steuerungs- und Managementeinheit (8) ist.

3. Dentalkabel (1) nach Anspruch 1 oder 2, umfassend ein Paar von elektrischen Drähten (13, 14), die eine Lichtquelle auf dem Handstück (2) oder auf dem Dentalkabel (1) versorgen; wobei das Paar von elektrischen Drähten (13, 14) dazu bestimmt ist, die Erfassungs-/Warnvorrichtung (6) zu versorgen, die aus einem Spannungsdetektor (4) besteht, der die Spannungsdifferenz zwischen den beiden elektrischen Drähten (13, 14) erfasst.

4. Dentalkabel (1) nach Anspruch 1 oder 2, umfassend wenigstens einen Schlauch (8), der von Druckluft durchströmbar ist; wobei das Dentalkabel (1) einen pneumatischen/elektrischen Aktuator (60) umfasst, der die Erfassungs-/Warnvorrichtung (6) mittels einer Spannung aktiviert, die von der durch den pneumatischen/elektrischen Aktuator (60) strömenden Druckluft erzeugt wird.

5. Dentalkabel (1) nach einem der vorstehenden Ansprüche, wobei die Erfassungs-/Warnvorrichtung (6) visuellen Typs ist, vorzugsweise eine LED und/oder ein Leuchtring, die rund um das Dentalkabel (1), vorzugsweise in der Nähe des zweiten Endabschnitts (12) des Dentalkabels (1) angeordnet ist.

6. Dentalkabel (1) nach einem der Ansprüche 1 bis 4, wobei die Erfassungs-/Warnvorrichtung (6) akustischen Typs ist.

7. Dentalkabel (1) nach einem der vorstehenden Ansprüche, wobei die Rücksetzungsmittel (7) eine Rücksetzungstaste umfassen, die an dem zweiten Endabschnitt (12) des Dentalkabels (1) angeordnet und manuell vom Bediener betätigbar ist; wobei die Erfassungs-/Warnvorrichtung (6) vorzugsweise auf der Rücksetzungstaste angeordnet ist.

8. Dentalkabel (1) nach einem der vorstehenden Ansprüche, wobei die Rücksetzungsmittel (7) einen Neigungssensor umfassen.

9. Anordnung, umfassend einen Köcher (F) und wenigstens ein Dentalkabel (1) nach einem der vorstehenden Ansprüche.

10. Dentalbehandlungseinheit, umfassend wenigstens ein Dentalkabel (1) nach einem der Ansprüche 1 bis 8.

## Revendications

1. Cordon dentaire (1) comprenant une première extrémité (11), que l'on peut brancher à un dispositif de support pour des outils de travail de dentisterie (F), et une seconde extrémité (12), que l'on peut brancher à une pièce à main dentaire (2) ;
Cordon dentaire (1) **caractérisé en ce qu'**il comprend :
- un chronomètre (5) à utiliser pour mesurer le temps total de fonctionnement de la pièce à main dentaire (2) ;
- un dispositif détecteur/activateur en mesurer de détecter quand la pièce à main dentaire (2) est en fonction et qui peut activer le chronomètre (5) lorsque la pièce à main dentaire (2) est en fonction ;
- un dispositif détecteur/avertisseur (6) ;
- un dispositif de branchement entre ledit chronomètre (5) et ledit dispositif détecteur/avertisseur (6) ; ledit dispositif de branchement pourvoyant à l'actionnement du dit dispositif détecteur/avertisseur (6) dès que le chronomètre (5) détecte que le temps total de fonctionnement de la pièce à main dentaire (2) dépasse une valeur prédéfinie ;
- des moyens de réinitialisation (7) utilisables pour mettre à zéro le chronomètre (5).

2. Cordon dentaire (1), selon la revendication 1, où ledit dispositif de branchement entre ledit chronomètre (5) et ledit dispositif détecteur/avertisseur (6) est un module de gestion et commande (8).

3. Cordon dentaire (1), selon la revendication 1 ou 2, comprenant une paire de fils électriques (13, 14) qui alimentent une source lumineuse placée sur la pièce à main dentaire (2) ou sur le cordon dentaire (1) ; ledit couple de fils électriques (13, 14) alimentant ledit dispositif détecteur/avertisseur (6), qui est un mesureur de tension (4) qui détecte la différence de tension entre les deux fils électriques (13, 14).

4. Cordon dentaire (1), selon la revendication 1 ou 2, comprenant au moins un tuyau (8) que l'air comprimé peut traverser ; ledit cordon dentaire (1) comprenant un actionneur pneumatique-électrique (60) qui active ledit dispositif détecteur/avertisseur (6) au moyen d'une tension générée par l'air comprimé qui traverse ledit actionneur pneumatique-électrique (60).

5. Cordon dentaire (1), selon l'une quelconque des revendications précédentes, où ledit dispositif détecteur/avertisseur (6) est visuel, préférablement une diode et/ou un anneau lumineux placé autour du cordon dentaire (1), préférablement à proximité de la seconde extrémité (12) du cordon dentaire (1).

6. Cordon dentaire (1), selon l'une quelconque des revendications de 1 à 4, où ledit dispositif détecteur/avertisseur (6) est acoustique.

7. Cordon dentaire (1), selon l'une quelconque des revendications précédentes, où lesdits moyens de réinitialisation (7) comprennent un bouton-poussoir de réinitialisation placé sur la seconde extrémité (12) du cordon dentaire (1) et pouvant être actionné manuellement par l'opérateur ; ledit dispositif détecteur/avertisseur (6) étant préférablement placé sur le bouton-poussoir de réinitialisation.

8. Cordon dentaire (1), selon l'une quelconque des revendications précédentes, où lesdits moyens de réinitialisation (7) comprennent un capteur d'inclinaison.

9. Appareil comprenant un dispositif de support pour des outils de travail de dentisterie (F) et au moins un cordon dentaire (1) selon l'une quelconque des revendications précédentes.

10. Unité dentaire comprenant au moins un cordon dentaire (1) selon l'une quelconque des revendications de 1 à 8.
